**Europäisches Patentamt**

**European Patent Office**

**Office européen des brevets**

(11) Veröffentlichungsnummer: **0 093 820**
**A1**

(12) **EUROPÄISCHE PATENTANMELDUNG**

(21) Anmeldenummer: **82810188.1**

(22) Anmeldetag: **04.05.82**

(51) Int. Cl.³: **A 01 F 25/20,** A 01 D 87/08,
E 02 F 3/81

(43) Veröffentlichungstag der Anmeldung: **16.11.83**
**Patentblatt 83/46**

(84) Benannte Vertragsstaaten: **AT BE CH DE FR GB IT LI LU
NL SE**

(71) Anmelder: **Priparop S.A., 30 rue st.-Pierre,
CH-1700 Freibourg (CH)**

(72) Erfinder: **Der Erfinder hat auf seine Nennung verzichtet**

(74) Vertreter: **Schweizer, Hans et al, Bovard AG
Patentanwälte VSP Optingenstrasse 16,
CH-3000 Bern 25 (CH)**

(54) **Silagegutschneider.**

(57) Ein Silagegutschneider ist mit einem Rahmen versehen, der an einem Schlepper befestigbar ist und einen
unteren Querbalken umfaßt, der mit einer Anzahl von parallelen, wenigstens ungefähr horizontalen Tragzinken ausgeführt ist, auf welchen ein Silagegutblock unterstützbar ist.
Der Silagegutschneider weist weiterhin ein Abgabeorgan
(11) auf, das dazu dient, einen auf den Tragzinken (3) unterstützten Silagegutblock auf den Boden überzubringen. Das
Abgabeorgan (11) stützt sich auf eine oder mehreren Tragzinken (3) und ist über einen Hub, welcher kleiner als die
Zinkenlänge ist, in Längsrichtung der Tragzinken (3) relativ
zu den Tragzinken (3) hin und her schiebbar.

Dadurch ist es möglich, daß das Abgabeorgan (11),
nachdem die Tragzinken (3) in der Stelle, wo der Silagegutblock abgesetzt werden soll, niedergelassen sind, wobei
das Silagegut zwischen den Tragzinken noch in ungenügendem Ausmaß den Boden berührt, bei einer darauffolgenden
Längsverstellung des Silagegutschneiders über den genannten Hub in Ruhe bleibt, wodurch der Silagegutblock,
teilweise unterstützt auf dem Abgabeorgan (11), von den
unter diesem weggezogenen Tragzinken (3) auf den Boden
sinkt. Nach dem genannten Hub folgt das Abgabeorgan (11)
der Längsverstellung des Silagegutschneiders wieder und
wird unter dem am Boden hinterbleibenden Silagegutblock
weggezogen.

ACTORUM AG

## SILAGEGUTSCHNEIDER

Die Erfindung bezieht sich auf einen Silagegutschneider, dessen Rahmen an einem Schlepper befestigbar ist und einen unteren Querbalken umfasst, der mit einer Anzahl von parallelen, wenigstens ungefähr horizontalen Tragzinken ausgeführt ist, auf welchen ein Silagegutblock unterstützbar ist.

Im Betrieb wird ein Silagegutschneider an erster Stelle zum Ausschneiden eines Silagegutblockes angewandt, wozu die Tragzinken des Silagegutschneiders, durch eine Verstellung des Schleppers, unter das Silagegut geschoben werden, woraufhin ein auf und ab bewegtes Schneid- oder Sägeorgan des Silagegutschneiders derart durch das Silagegut hindurchbewegt wird, dass ein Silagegutblock ausgeschnitten wird. Daraufhin wird dieser Silagegutblock, unterstützt auf den Tragzinken des Silagegutschneiders, mit Hilfe des Schleppers abtransportiert zu einer Stelle, wo der Block abgelagert oder angewandt werden soll. In dieser Stelle soll der Silagegutblock deshalb von den Tragzinken des Silagegutschneiders auf den Boden abgesetzt werden. Diese Ueberbringung eines Silagegutblockes von den Tragzinken des Silagegutschneiders auf den Boden geschieht, besonders wenn es sich um einen harten Boden, beispielsweise aus Beton, handelt, im allgemeinen dadurch, dass vom Schlepperfahrer lockeres Silagegut auf diesen Boden geschüttet wird, woraufhin die Tragzinken des Silagegutschneiders in dieses lockere Silagegut abwärts bewegt und daraufhin zurückgezogen werden, woraufhin der Silagegutblock auf dem lockeren Material zu ruhen kommt. Diese Art des Ueberbringens eines Silagegutblockes auf den Boden ist sehr zeitraubend.

Die vorliegende Erfindung beabsichtigt, einen Silagegutschneider der im Oberbegriff genannten Art in der Weise auszuführen, dass die Ablagerung eines Silagegutblockes von den Tragzinken eines Silagegutschneiders sehr schnell stattfinden kann.

Zu diesem Zweck ist der Silagegutschneider nach der Erfindung dadurch gekennzeichnet, dass ein Abgabeorgan, das dazu dient, einen auf den Tragzinken unterstützten Silagegutblock auf den Boden überzubringen, sich auf einer oder mehreren Tragzinken stützt und über einen Hub, welcher kleiner als die Zinkenlänge ist, in Längsrichtung der Tragzinken relativ zu den Tragzinken hin- und herschiebbar ist.

Nachdem die Tragzinken in der Stelle, wo der Silagegutblock abgesetzt werden soll, niedergelassen sind, wobei das Silagegut zwischen den Tragzinken noch in ungenügendem Ausmass den Boden berührt, wird das Abgabeorgan bei einer darauffolgenden Längsverstellung des Silagegutschneiders über den genannten Hub in Ruhe bleiben, wodurch der Silagegutblock, teilweise unterstützt auf dem Abgabeorgan, von den unter diesem weggezogenen Tragzinken auf den Boden sinkt, während das Abgabeorgan nach dem genannten Hub der Längsverstellung des Silagegutschneiders wieder folgt und unter dem am Boden hinterbleibenden Silageblock weggezogen wird.

Dabei kann das Abgabeorgan in der gehobenen Lage der Tragzinken sich bis zu einer niedrigeren Niveau erstrecken als die Tragzinken und beim Niederlassen der Tragzinken, durch die Berührung des Bodens, relativ zu den Tragzinken in aufwärtser Richtung verstellbar sein.

Durch diese aufwärtse Verstellung des Abgabeorgans relativ zu den Tragzinken kommt der Silagegutblock in erheblich zunehmendem Ausmass auf dem Abgabeorgan zu ruhen, wodurch das Wegziehen der Tragzinken vereinfacht wird.

Weiterhin kann das Abgabeorgan mit dem Silagegutschneider mittels eines Begrenzungsorgans verbunden sein, das den genannten Hub bestimmt.

In einer vorteilhaften Ausführung des Silagegutschneiders nach der Erfindung umfasst das Abgabeorgan eine Anzahl von Profilen, die in der Längsrichtung der Tragzinken verlaufen.

Dabei kann wenigstens eines der Profile, bzw. wenigstens eine der Tragzinken, einen Längsschlitz aufweisen, in welchem ein Ansatz der zusammenwirkenden Tragzinke, bzw.

des zusammenwirkenden Profils, über den genannten Hub hin- und herschiebbar ist.

In einer vorteilhaften Ausführung des Silagegutschneiders nach der Erfindung sind als Profile U-Profile angewandt, deren Schenkel abwärts gerichtet sind.

Als Alternative ist es möglich, dass die Profile als Hohlköcher ausgeführt sind, die je einen Teil wenigstens einer Tragzinke aufnehmen.

Die Profile können wenigstens auf einer Seite einen Flügel aufweisen, welcher die obere Fläche vergrössert, wodurch ein unerwünschtes Vordringen der Profile in das Silagegut in zweckmässiger Weise vorgebeugt wird.

In diesem Fall kann (können) der (die) Flügel am vom Querbalken abgekehrten Ende wenigstens ungefähr in einer Spitze enden, damit der auftretende Widerstand beim Einführen der Tragzinken mit dem Abgabeorgan in das Silagegut möglichst klein wird.

Als weitere Alternative kann das Abgabeorgan wenigstens ein Plattenelement umfassen, das abwärts ausragende Beine aufweist, welche in der gehobenen Lage der Tragzinken sich bis zu einem niedrigeren Niveau erstrecken als die Tragzinken.

Dabei kann das (jedes) Plattenelement wenigstens über den vom Querbalken abgekehrten Endteil mit einer in der Längsrichtung der Tragzinken verlaufenden, U-förmigen Durchdrückung ausgeführt sein.

Vorzugsweise werden die Seitenkanten des (jedes) Plattenelementes wenigstens über den vom Querbalken entfernten Endteil in der vom Querbalken abgekehrten Richtung konvergieren, damit der auftretende Widerstand beim Einführen der Tragzinken mit dem Abgabeorgan in das Silagegut möglichst viel reduziert wird.

Weiterhin kann unter dem vom Querbalken entfernten Ende der U-förmigen Durchdrückung des (jedes) Plattenelementes eine untere Schliessplatte angeordnet sein.

Die Profile, bzw. die Plattenelemente, können durch ein in der Querrichtung verlaufendes Verbindungselement miteinander verbunden sein.

Als Alternative ist es auch möglich, dass jedes Profil, bzw. jedes Plattenelement ein eigenes Begrenzungsorgan aufweist.

Die Erfindung wird weiterhin an Hand der Zeichnung erläutert.

Fig. 1 ist eine perspektivische Ansicht einer Ausführung eines Silagegutschneiders nach der Erfindung, welcher mit einem Abgabeorgan ausgeführt ist.

Fig. 2 ist eine perspektivische Ansicht des Querbalkens und der Tragzinken des Silagegutschneiders nach Fig.1, welcher mit einem abgeänderten Abgabeorgan ausgerüstet ist.

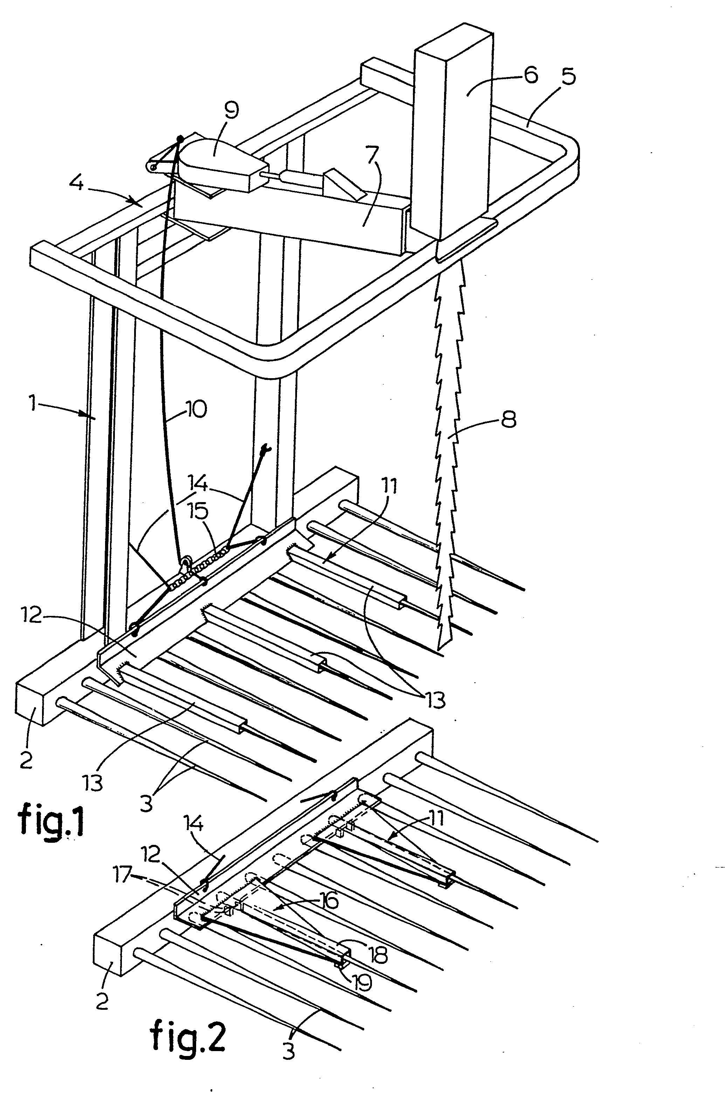

Der in Fig. 1 dargestellte Silagegutschneider umfasst einen Rahmen 1, welcher an einem Schlepper befestigt werden kann und welcher einen unteren Querbalken 2 umfasst, welcher mit einer Anzahl von parallelen, wenigstens ungefähr horizontalen Tragzinken 3 ausgeführt ist, auf welchen ein Silagegutblock unterstützt werden kann.

Der Rahmen 1 umfasst in der Nähe des oberen Endes ein wenigstens ungefähr horizontaler Rahmenwerk 4 mit im wesentlichen rechteckiger Gestaltung, das eine ungefähr U-förmige Führung 5 bildet, an welcher entlang ein Getriebegehäuse 6 hin- und herbewegt werden kann.

Dieses Getriebegehäuse 6, das durch einen teleskopisch ausgeführten Tragarm 7 unterstützt wird, der drehbar mit dem Rahmen verbunden ist, dient als Führung für ein Sägeorgan 8, das, mit Hilfe einer hydraulisch betätigten Zylinder-Kolbeneinheit im Getriebegehäuse 6, aufwärts und abwärts verstellbar ist. Natürlich kann statt eines Sägeorgans 8 auch ein Schneidorgan, wie ein Steckspaten, angewandt werden.

Die Bewegungsrichtung des Getriebegehäuses 6 über die U-förmige Führung 5 ist umkehrbar mittels eines Umkehrmechanismus 9, der durch ein Seil 10 betätigbar ist.

Nach der Erfindung stützt sich ein Abgabeorgan 11, das dazu dient, einen auf den Tragzinken 3 unterstützten Silagegutblock auf den Boden überzubringen, auf einer Anzahl von Tragzinken 3. Dieses Abgabeorgan 11 umfasst in den in der Zeichnung dargestellten Ausführungsbeispielen ein in der Querrichtung verlaufendes Verbindungselement 12, das wie aus der Zeichnung hervorgeht, im Querschnitt ungefähr L-förmig sein kann und das eine Anzahl von Profilen 13 trägt, die in der Längsrichtung der Tragzinken verlaufen.

Diese Profile 13 sind im Ausführungsbeispiel nach Fig. 1 als Hohlköcher ausgeführt, die je einen Teil einer Tragzinke 3 aufnehmen. Wenn die Tragzinken 3 beispielsweise eine Länge von zirka 80 cm aufweisen, so kann die Länge der Köcher beispielsweise 40 cm betragen.

Im dargestellten Ausführungsbeispiel sind elf Tragzinken 3 dargestellt, während das Abgabeorgan 11 drei Köcher umfasst, die je eine Tragzinke teilweise aufnehmen. Natürlich kann auch eine andere Anzahl von Köchern angewandt werden, während weiterhin ein Köcher auch durch mehr als eine Tragzinke 3 durchlaufen werden könnte.

Die Hohlköcher, die im dargestellten Ausführungsbeispiel einen rechteckigen Querschnitt aufweisen, aber auch mit einem anderen, beispielsweise mit einem dreieckigen Querschnitt ausgeführt sein können, verjüngen sich sowohl in horizontaler als auch in vertikaler Richtung in der vom Querbalken 2 abgekehrten Richtung.

Als Alternative für die Köcher können mit Vorteil als Profile 13 auch U-Profile angewandt sein, deren Schenkel abwärts gerichtet sind. Auch andere Profile sind natürlich möglich.

Der freie Stirnrand der Profile 13 kann messerartig sein, um das Einführen unter das Silagegut vor dem Ausschneiden eines Silagegutblockes zu erleichtern.

Die Profile 13 erstrecken sich, in der gehobenen Lage des Querbalkens 2 mit den Tragzinken 3, bis zu einem niedrigeren Niveau als die Tragzinken 3. Dabei kann die obere Fläche des Abgabeorgans 11, nachdem die Profile 13 den Boden berührt haben, sich in der vom Querbalken 2 abgekehrten Richtung etwa schräg abwärts erstrecken. Die Profile 13 können auf der Unterseite wenigstens teilweise mit verschleissfestem Material ausgeführt sein.

Zwischen dem Rahmen 1 und dem Verbindungselement 12 verlaufen zwei Ketten 14 oder dergleiche, welche eine derartige Länge aufweisen, dass das Abgabeorgan 11 über einen Hub, welcher kleiner als die Zinkenlänge ist und beispielsweise 45 cm beträgt, in der Längsrichtung der Tragzinken 3 relativ zu den Tragzinken 3 hin- und herschiebbar ist.

Zwischen den beiden Ketten 14, die deshalb die

- 6 -

0093820

Länge des Hubes bestimmen, den das Abgabeorgan 11 relativ zu den Tragzinken 3 zurücklegen kann, ist eine Zugfeder 15 angeordnet, die die Ketten 14 in der in der Zeichnung dargestellten Weise zueinander ziehen kann, so dass diese Ketten 14 nicht zwischen dem Querbalken 2 und dem Verbindungselement 12 beklemmt werden können.

Statt der Ketten 14 kann als Begrenzungsorgan für die Hublänge wenigstens eines der Profile 13 einen Längsschlitz aufweisen, in welchem ein Ansatz der darin aufgenommenen Tragzinke 3 über diese Hublänge hin- und herschiebbar ist. Natürlich kann der Längsschlitz auch in wenigstens einer der Tragzinken 3 gebildet sein, in welchem Fall der Ansatz am zusammenwirkenden Profil 13 angeordnet ist.

Wenn ein Silagegutschneider mit einem auf den Tragzinken 3 unterstützten Silagegutblock die Stelle erreicht hat, wo dieses Silagegut vom Silagegutschneider auf den Boden abgesetzt werden soll, werden der Silagegutschneider und deshalb auch der Querbalken 2 mit den Tragzinken 3, abwärts verstellt, wobei die unter den Tragzinken 3 ausragenden Profile 13 den Boden berühren und, während der weiteren abwärtsen Verstellung des Silagegutschneiders, relativ zu den Tragzinken 3 in aufwärtser Richtung verstellt werden. Durch diese aufwärtse Verstellung der Köcher relativ zu den Tragzinken 3 kommt der Silagegutblock für einen erheblichen Teil auf diesen Köchern zu ruhen.

Durch die aufwärtse Verstellung der Profile 13 relativ zu den Tragzinken 3 kommen diese Tragzinken 3 praktisch ausser Berührung mit den Profilen 13. Bei einer darauffolgenden Längsverstellung des Silagegutschneiders mit Hilfe eines Schleppers, wird das Abgabeorgan 11 nicht sofort mitgenommen werden, jedoch in Ruhe bleiben über den durch die Ketten 14 bestimmten Hub.

Dabei wird der Silagegutblock, der sich teilweise auf den Profilen 13 stützt, von den, unter diesem weggezogenen, Tragzinken 3 auf den Boden sinken. Nachdem die Ketten 14 entgegen der Wirkung der Zugfeder 15 gespannt sind, wird das Abgabeorgan 11 der Längsverstellung des Silagegutschneiders wieder folgen müssen und dabei unter dem Silagegutblock weggezogen werden.

Sobald das Abgabeorgan 11 frei vom am Boden hinterbleibenden Silagegutblock gekommen ist, wird die Zugfeder 15 die Ketten 14 wieder zueinanderziehen, bis das Verbindungselement 12 an den Querbalken 2 anstösst. Daraufhin hat das Abgabeorgan 11 wieder die Lage erreicht, welche in der Zeichnung dargestellt ist.

Während des Hubes des Abgabeorgans 11 in der vom Querbalken 2 abgekehrten Richtung nimmt das Verbindungselement 12 das Seil 10, das am Verbindungselement 12 befestigt ist, mit, wodurch dieses Seil 10 die Umschaltung der Bewegungsrichtung des Getriebegehäuses 6 veranstaltet.

In Fig. 2 ist der Querbalken 2 mit den Tragzinken 3 des Silagegutschneiders nach Fig. 1 dargestellt, der mit einem geänderten Abgabeorgan 11 ausgerüstet ist. Dieses Abgabeorgan 11 umfasst zwei Plattenelemente 16, die an einem im Querschnitt L-förmigen Verbindungselement 12 befestigt sind und die, auf der Seite des Querbalkens 2, abwärts ausragende Beine 17 aufweisen, welche in der gehobenen Lage der Tragzinken 3 sich bis zu einem niedrigeren Niveau erstrecken als die Tragzinken 3. Jedes Plattenelement 16 ist über den, vom Querbalken 2 abgekehrten Endteil mit einer in der Längsrichtung der Tragzinken 3 verlaufenden U-förmigen Durchdrückung 18 ausgeführt, welche eine Tragzinke 3 übergreift. Die Seitenkanten jedes Plattenelementes 16 konvergieren in der, vom Querbalken 2 abgekehrten,Richtung. Unter dem vom Querbalken 2 entfernten Ende der U-förmigen Durchdrückung 18 jedes Plattenelementes 16 ist eine untere Schliessplatte 19 angeordnet, die, ebenso wie die Beine 17, beim Niederlassen der Tragzinken 3, durch die Berührung des Bodens relativ zu den Tragzinken 3 in aufwärtser Richtung verstellbar ist, wodurch die Tragzinken 3 praktisch frei von den Plattenelementen 16 kommen.

Als Alternative für die Plattenelemente 16 ist es auch möglich, dass Profile, beispielsweise U-Profile, angewandt sind, die auf einer Seite oder auf beiden Seiten einen Flügel aufweisen, der die obere Fläche vergrössert.

Durch die relativ grosse Tragfläche der Plattenelemente 16 nach Fig. 2, bzw. der Profile mit Flügeln, wird ein Vordringen der Plattenelemente 16, bzw. der Profile mit Flügeln, in das Silagegut, wodurch das Abgeben des Silagegutblockes auf den Boden erschwert würde, in zweckmässiger Weise vorgebeugt.

Als weitere Alternative für die dargestellten Ausführungen können die Profile 13, bzw. die Plattenelemente 16, auch ohne Verbindungselemente 12 funktionieren. In diesem Fall soll jedes Profil 13, bzw. jedes Plattenelement 16, mit einem eigenen Begrenzungsorgan, beispielsweise einer Kette, ausgeführt sein.

Wenn ohne Zugfedern 15 gewirkt wird, wird das Abgabeorgan 11 beim erneuten Einführen in das Silagegut zu seiner Lage in der Nähe des Querbalkens 2 zurückverstellt werden.

Die Erfindung beschränkt sich nicht auf das in der Zeichnung dargestellte Ausführungsbeispiel, das in verschiedenen Weisen im Rahmen der Erfindung abgeändert werden kann.

Patentansprüche:

1. Silagegutschneider, dessen Rahmen an einem Schlepper befestigbar ist und einen unteren Querbalken umfasst, der mit einer Anzahl von parallelen, wenigstens ungefähr horizontalen Tragzinken ausgeführt ist, auf welchen ein Silagegutblock unterstützbar ist, d a d u r c h  g e k e n n z e i c h n e t, dass ein Abgabeorgan, das dazu dient, einen auf den Tragzinken unterstützten Silagegutblock auf den Boden überzubringen, sich auf einer oder mehreren Tragzinken stützt und über einen Hub, welcher kleiner als die Zinkenlänge ist, in Längsrichtung der Tragzinken relativ zu den Tragzinken hin- und herschiebbar ist.

2. Silagegutschneider nach Anspruch 1, d a d u r c h  g e k e n n z e i c h n e t, dass das Abgabeorgan in der gehobenen Lage der Tragzinken sich bis zu einer niedrigeren Niveau erstreckt als die Tragzinken und beim Niederlassen der Tragzinken, durch die Berührung des Bodens relativ zu den Tragzinken in aufwärtser Richtung verstellbar ist.

3. Silagegutschneider nach Anspruch 2, d a d u r c h  g e k e n n z e i c h n e t, dass die obere Fläche des Abgabeorgans, nachdem das Abgabeorgan den Boden berührt hat, in der vom Querbalken abgekehrten Richtung etwa schräg abwärts verläuft.

4. Silagegutschneider nach Anspruch 1, 2 oder 3, d a d u r c h  g e k e n n z e i c h n e t, dass das Abgabeorgan mit diesem mittels eines Begrenzungsorgans verbunden ist, das den genannten Hub bestimmt.

5. Silagegutschneider nach Anspruch 4, d a d u r c h  g e k e n n z e i c h n e t, dass das Abgabeorgan mittels einer oder mehrerer Ketten oder dergleiche mit dem Rahmen verbunden ist.

6. Silagegutschneider nach einem der vorstehenden Ansprüche, d a d u r c h  g e k e n n z e i c h n e t, dass das Abgabeorgan eine Anzahl von Profilen umfasst, die in der Längsrichtung der Tragzinken verlaufen.

7. Silagegutschneider nach Anspruch 6, d a d u r c h  g e k e n n z e i c h n e t, dass wenigstens eines der Profile, bzw. wenigstens eine der Tragzinken, einen Längsschlitz aufweist, in welchem ein·Ansatz der zusammenwirkenden Tragzinke, bzw. des zusammenwirkenden Profils, über den genannten Hub hin und herschiebbar ist.

8. Silagegutschneider nach Anspruch 6 oder 7, d a d u r c h g e k e n n z e i c h n e t, dass als Profile U-Profile angewandt sind, deren Schenkel abwärts gerichtet sind.

9. Silagegutschneider nach Anspruch 6 oder 7, d a d u r c h g e k e n n z e i c h n e t, dass die Profile als Hohlköcher ausgeführt sind, die je einen Teil wenigstens einer Tragzinke aufnehmen.

10. Silagegutschneider nach Anspruch 9, d a d u r c h g e k e n n z e i c h n e t, dass die Hohlköcher wenigstens über ihren vom Querbalken entfernten Endteil sowohl in horizontaler wie auch in vertikaler Richtung sich in der vom Querbalken abgekehrten Richtung verjüngen.

11. Silagegutschneider nach Anspruch 9 oder 10, d a d u r c h g e k e n n z e i c h n e t, dass die Hohlköcher einen rechteckigen Querschnitt aufweisen.

12. Silagegutschneider nach Anspruch 9 oder 10, d a d u r c h g e k e n n z e i c h n e t, dass die Hohlköcher einen dreieckigen Querschnitt aufweisen.

13. Silagegutschneider nach Anspruch 6, 7 oder 8, d a d u r c h g e k e n n z e i c h n e t, dass die Profile auf wenigstens einer Seite einen Flügel aufweisen, welcher die obere Fläche vergrössert.

14. Silagegutschneider nach Anspruch 13, d a d u r c h g e k e n n z e i c h n e t, dass der (die) Flügel am vom Querbalken abgekehrten Ende wenigstens ungefähr in einer Spitze enden.

15. Silagegutschneider nach einem der Ansprüche 6 - 14, d a d u r c h g e k e n n z e i c h n e t, dass die Profile durch ein in der Querrichtung verlaufendes Verbindungselement miteinander verbunden sind.

16. Silagegutschneider nach einem der Ansprüche 6 - 14, d a d u r c h g e k e n n z e i c h n e t, dass jedes Profil ein eigenes Begrenzungsorgan aufweist.

17. Silagegutschneider nach einem der Ansprüche 5 - 16, d a d u r c h g e k e n n z e i c h n e t, dass

0093820

die Unterseite der Profile wenigstens teilweise mit verschleissfestem Material ausgeführt ist.

18. Silagegutschneider nach einem der Ansprüche 6 - 17, d a d u r c h   g e k e n n z e i c h n e t, dass der freie Stirnrand der Profile messerartig ist.

19. Silagegutschneider nach Anspruch 15, d a d u r c h   g e k e n n z e i c h n e t, dass die Kette(n) an das Verbindungselement angreift (angreifen).

20. Silagegutschneider nach einem der Ansprüche 16 - 18, d a d u r c h   g e k e n n z e i c h n e t, dass an jedes Profil eine Kette angreift.

21. Silagegutschneider nach einem der Ansprüche 1 - 5, d a d u r c h   g e k e n n z e i c h n e t, dass das Abgabeorgan wenigstens ein Plattenelement umfasst, das abwärts ausragende Beine aufweist, welche in der gehobenen Lage der Tragzinken sich bis zu einem niedrigeren Niveau erstrecken als die Tragzinken.

22. Silagegutschneider nach Anspruch 21, d a - d u r c h   g e k e n n z e i c h n e t, dass die Beine an dem (jedem) Plattenelement in der Nähe des auf der Seite des Querbalkens liegenden Ende angeordnet sind.

23. Silagegutschneider nach Anspruch 22, d a - d u r c h   g e k e n n z e i c h n e t, dass das (jedes) Plattenelement wenigstens über den vom Querbalken abgekehrten Endteil mit einer in der Längsrichtung der Tragzinken verlaufenden, U-förmigen Durchdrückung ausgeführt ist.

24. Silagegutschneider nach Anspruch 22 oder 23, d a d u r c h   g e k e n n z e i c h n e t, dass die Seitenkanten des (jedes) Plattenelementes wenigstens über den vom Querbalken entfernten Endteil in der vom Querbalken abgekehrten Richtung konvergieren.

25. Silagegutschneider nach einem der Ansprüche 22 - 24, d a d u r c h   g e k e n n z e i c h n e t, dass unter dem vom Querbalken entfernten Ende der U-förmigen Durchdrückung des (jedes) Plattenelementes eine untere Schliessplatte angeordnet ist.

26. Silagegutschneider nach einem der Ansprüche 21 - 25, d a d u r c h   g e k e n n z e i c h n e t, dass eine Anzahl von Plattenelementen durch ein in der Querrichtung verlaufendes Verbindungselement miteinander verbunden sind.

27. Silagegutschneider nach einem der Ansprüche 21 - 25, d a d u r c h   g e k e n n z e i c h n e t, dass jedes Plattenelement ein eigenes Begrenzungsorgan aufweist.

28. Silagegutschneider nach einem der Ansprüche 5 - 27, d a d u r c h   g e k e n n z e i c h n e t, dass eine Feder an die Kette(n) angreift.

29. Silagegutschneider nach einem der vorstehenden Ansprüche, bei welchem der Rahmen in der Nähe des oberen Endes ein wenigstens ungefähr horizontales Rahmenwerk mit im wesentlichen rechteckiger Gestaltung umfasst, das eine ungefähr U-förmige Führung bildet, an welcher entlang ein Getriebegehäuse hin- und herbeweglich ist, in welchem ein Säge- oder Schneidorgan auf und ab verstellbar ist, während die Bewegungsrichtung des Getriebegehäuses über die U-förmige Führung durch einen Umkehrmechanismus umkehrbar ist, welcher mittels eines Seiles betätigbar ist, d a d u r c h   g e - k e n n z e i c h n e t, dass das Seil mit dem Abgabeorgan verbunden ist und bei jedem Hub des Abgabeorgans in der vom Querbalken abgekehrten Richtung die Umkehrung der Bewegungsrichtung des Getriebegehäuses veranstaltet.

1/1   0093820

fig.1

fig.2

Europäisches
Patentamt

**EUROPÄISCHER RECHERCHENBERICHT**

0093820

Nummer der Anmeldung

EP 82 81 0188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-1 555 361 (TRUCK SALES LTD.) <br> * Seite 2, Zeilen 70-129; Figuren 1,2 * | 1-4,6, 9,15 | A 01 F 25/20 <br> A 01 D 87/08 <br> E 02 F 3/81 |
| A | EP-A-0 006 588 (BAMLETT LTD.) <br> * Ansprüche 1-11 * | 1,3-5 | |
| A | GB-A-2 057 536 (SEOSAMH MacAOIDH) | | |
| A | EP-A-0 034 742 (VON DER HEIDE) | | |

RECHERCHIERTE
SACHGEBIETE (Int. Cl. ³)

A 01 F
A 01 D
E 02 F

Der vorliegende Recherchenbericht wurde für alle Patentansprüche erstellt.

| Recherchenort <br> DEN HAAG | Abschlußdatum der Recherche <br> 05-01-1983 | Prüfer <br> MARTIN D.R.V. |
|---|---|---|